# EUROPEAN PATENT SPECIFICATION

(11) **EP 2 736 202 B1**
(45) Date of publication and mention of the grant of the patent: **16.01.2019**
(21) Application number: 12823380.6
(22) Date of filing: 13.07.2012
(51) Int. Cl.: H04L 12/70

(54) **MESSAGE RECEIVING AND SENDING METHOD, DEVICE, AND SYSTEM**
VERFAHREN, VORRICHTUNG, UND SYSTEM ZUM SENDEN UND EMPFANGEN VON NACHRICHTEN
PROCÉDÉ, DISPOSITIF ET SYSTÈME DE RÉCEPTION ET DE TRANSMISSION DE MESSAGE

(30) Priority: 18.08.2011 CN 201110237474
(43) Date of publication of application: 28.05.2014
(73) Proprietor: ZTE Corporation, Shenzhen, Guangdong 518057 (CN)
(72) Inventor: ZHOU, Jia, Shenzhen Guangdong 518057 (CN); QIAN, Yong, Shenzhen Guangdong 518057 (CN); WANG, Ning, Shenzhen Guangdong 518057 (CN)
(74) Representative: Gervasi, Gemma
(86) International application number: PCT/CN2012/078595
(87) International publication number: WO 2013/023509

(56) References cited:
- CN-A- 101 262 424
- CN-A- 101 631 069
- CN-A- 101 924 676
- CN-A- 102 263 700
- US-A1- 2008 151 895
- US-A1- 2008 253 367
- US-A1- 2008 270 580

## Description

### Technical Field

The present document relates to the field of communication technology, and particularly, to a method, device and system for receiving and sending messages.

### Background of the Related Art

The Multi-Protocol Label Switching (MPLS) technology is a technology based on label encapsulation and forwarding, which combines a strong layer 3 routing function of an Internet Protocol (IP) network with an efficient forwarding mechanism of a traditional layer 2 network, thereby greatly enhancing the forwarding efficiency. An edge device of a Packet Switched Network (PSN) of the MPLS performs label encapsulation and decapsulation on a data message and forward the data message to a final user equipment, and an intermediate equipment just performs label forwarding. Since in the process of MPLS forwarding, payloads in the message are not modified, the payloads are a part except a Multiple Access Channel (MAC) of public network, a Virtual Local Area Network (VLAN) of public network and a label, and the payloads may be a plurality of random values, when an Equal-Cost Multipath (ECMP) routing function is enabled, certain IP messages on the same Pseudowire may be switched to other forwarding paths in that the random values satisfy an ECMP condition.

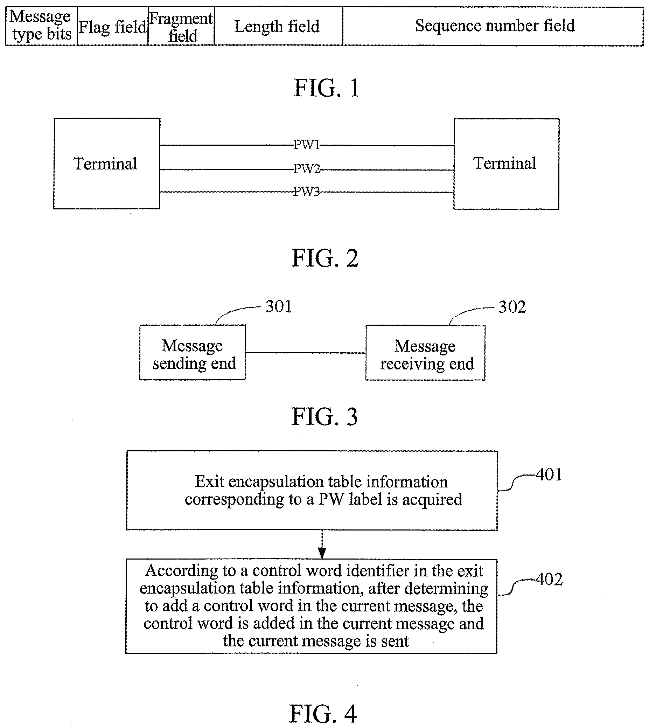

With respect to the above problem, a concept of a control word is put forward in the Request For Comment (RFC) 4385, and as shown in FIG. 1, the control word is of 4 bytes inserted after a bottom-of-stack label, including message type bits (4 bits), a flag field (4 bits), a fragment field (2 bits), a length field (6 bits) and a sequence number field (16 bits) used for avoiding that random payloads are falsely matched as the IP messages, thereby mistakenly following a processing flow of ECMP. Certain fields contained in the control word also have the following functions:
1. it is used for differentiating a data message (the first 4 bits of the control word are 0000) and a detection message (the first 4 bits of the control word are 0001);
2. it is used for checking whether messages are discarded (with regard to the sequence number field in the control word, the function also can be customized by users); and
3. it is used for marking whether it is a fragment packet (with regard to the fragment field in the control word, the function also can be customized by users).

However, the device normally uses a control word function enabled or closed based on overall situation at present, which cannot select whether to enable or close the control word according to a specific scenario. As shown in FIG. 2, it is a schematic diagram of application scenario of transmitting messages in the related art, multiple PWs are borne on the same tunnel between two terminals, such as a PW1, a PW2 and a PW3, the PW1 and PW3 may need to carry an encapsulation mode of the control word, and it is not required to enable the PW2. In this case, if a control word enabled or closed based on overall situation is used, the above two requirements cannot be satisfied simultaneously. In addition, when performing docking with other devices, if control word modes of the two sides are not uniform, it will cause an error on processing, it is assumed that the following MPLS PSN scenario exists: if an opposite end device enables a control word, an MPLS message received by the current end device carries a control word field, in a case that the current end device does not enable the control word, the control word in the message will not be identified, and the control word will be mistakenly taken as a payload part carried by the message, which causes a forwarding error; on the contrary, a message sent from the current end device to the opposite end device does not carry control word information, and the opposite end device also enables the control word, thus, the opposite end will mistakenly take the 4 bytes after the PW label in the MPLS message sent by the current end as the control word to process.

An example of prior art method is described in US2008/151895A1.

### Summary of the Invention

The example of the present document provides a method, device and system for receiving and sending messages, which can select to enable or close a control word according to a specific scenario and perform corresponding processing on a message according to whether the control word is carried, thus reducing a probability of mistakenly processing the messages.

The example of the present document provides a method for sending messages, which comprises:
acquiring, by a message sending end, exit encapsulation table information corresponding to a Pseudowire (PW) label; and
after determining to add a control word in a current message according to a control word identifier in the exit encapsulation table information, adding the control word in the current message and sending the current message.

The step of adding the control word in the current message comprises: according to a type of the current message, adding a corresponding control word into the current message.

The example of the present document provides a method for receiving messages, which comprises:
parsing, by a message receiving end, a received current message;
according to Pseudowire (PW) label information of the current message obtained by parsing, searching a corresponding index label attribute table; and
after determining that the current message carries a control word according to a control word identifier in the index label attribute table, processing the current message according to a type of the current message.

The step of processing the current message according to a type of the current message comprises:
when determining that the current message is a data message according to a type of the control word carried in the current message, deleting the control word, and forwarding the processed data message; and
when determining that the current message is a detection message according to a type of the control word carried in the current message, processing the detection message.

The method further comprises: after determining that the current message does not carry the control word according to the control word identifier in the index label attribute table, directly forwarding the current message.

The example of the present document provides a device for sending messages, which comprises: an acquiring module and a first processing module, wherein,
the acquiring module is configured to: acquire exit encapsulation table information corresponding to a Pseudowire (PW) label; and
the first processing module is configured to: after determining to add a control word in a current message according to a control word identifier in the exit encapsulation table information, add the control word in the current message and send the current message.

The first processing module is further configured to: when adding the control word in the current message, according to a type of the current message, adding a corresponding control word into the current message.

The example of the present document provides a device for receiving messages, which comprises: a parsing module, a searching module and a second processing module, wherein,
the parsing module is configured to: parse a received current message;
the searching module is configured to: according to Pseudowire (PW) label information of the current message obtained by parsing, search a corresponding index label attribute table; and
the second processing module is configured to: after determining that the current message carries a control word according to a control word identifier in the index label attribute table, process the current message according to a type of the current message.

The second processing module is further configured to: when determining that the current message is a data message according to a type of the control word carried in the current message, delete the control word, and forward the processed data message; and when determining that the current message is a detection message according to a type of the control word carried in the current message, process the detection message.

The second processing module is further configured to: after determining that the current message does not carry the control word, directly forward the current message.

Correspondingly, the example of the present document provides a system for receiving and sending messages, which comprises: a message sending end and a message receiving end; wherein,
the message sending end is configured to: acquire exit encapsulation table information corresponding to a Pseudowire (PW) label; and
after determining to add a control word in a current message according to a control word identifier in the exit encapsulation table information, add the control word in the current message and send the current message; and
the message receiving end is configured to: parse the current message received; according to PW label information of the current message obtained by parsing, search a corresponding index label attribute table; and after determining that the current message carries the control word according to the control word identifier in the index label attribute table, process the current message according to a type of the current message.

The example of the present document provides a method, device and system for receiving and sending messages, which is used for acquiring the exit encapsulation table information corresponding to the PW label; and according to the control word identifier in the exit encapsulation table information, after determining to add the control word in the current message, adding the control word in the current message and sending the current message; parsing the received current message; according to the PW label information of the current message obtained by parsing, searching the corresponding index label attribute table; and according to the control word identifier in the index label attribute table, after determining that the current message carries the control word, processing the current message according to the type of the current message. With the method, device and system for receiving and sending messages provided by the example of the present document, at the message sending end, it is determined whether to add the control word in the message according to a specific situation through a control word identifier bit corresponding to the PW label; and at the message receiving end, corresponding processing is performed according to whether the message carries the control word, thus, it can select to enable or close the control word according to a specific scenario, which reduces a probability of mistakenly processing the messages.

The scope of the invention is defined by the appended claims.

### Brief Description of Drawings

FIG. 1 is a schematic diagram of a structure of a control word in the related art.
FIG. 2 is a schematic diagram of an application scenario of transmitting messages in the related art.
FIG. 3 is a schematic diagram of a system for receiving and sending messages in the example of the present document.
FIG. 4 is a flow diagram of a method for sending messages in the example of the present document.
FIG. 5 is a flow diagram of a method for receiving messages in the example of the present document.
FIG. 6 is a flow diagram of a method for sending messages in another example of the present document.
FIG. 7 is a flow diagram of a method for receiving messages in another example of the present document.
FIG. 8 is a schematic diagram of a device for sending messages in the example of the present document.
FIG. 9 is a schematic diagram of a device for receiving messages in the example of the present document.

### Preferred Embodiments of the Invention

The main implementation principle, specific embodiment and beneficial effects thereof which can be achieved correspondingly of the technical scheme of the example of the present document will be elaborated in detail in combination with the accompanying drawings below.

In order to solve the problem existing in the related art, the example of the present document provides a system for receiving and sending messages, and as shown in FIG. 3, a message sending end 301 and a message receiving end 302 are included;
wherein, the message sending end 301 is configured to: acquire exit encapsulation table information corresponding to a PW label; and after determining to add a control word in the current message according to a control word identifier in the exit encapsulation table information, add the control word in the current message and send the current message; and
the message receiving end 302 is configured to: parse the received current message; according to PW label information of the current message obtained by parsing, search a corresponding index label attribute table; and
after determining that the current message carries the control word according to the control word identifier in the index label attribute table, process the current message according to a type of the current message.

The process of the message sending end 301 and the message receiving end 302 processing messages will be respectively explained in detail below. As shown in FIG. 4, it is a flow diagram of a method for sending messages provided by the example of the present document, and the following steps are included.

In step 401, exit encapsulation table information corresponding to a PW label is acquired.

In step 402, after determining to add a control word in the current message according to a control word identifier in the exit encapsulation table information, the control word is added in the current message and the current message is sent.

Specifically, when the current message is sent through the PW, exit encapsulation table information corresponding to the PW label is acquired first, wherein, each PW has a unique PW label, and the exit encapsulation table information corresponding to the PW can be found through the PW label. The exit encapsulation table information includes information such as a control word identifier and so on, if a value of the control word identifier is 1, it indicates that control word encapsulation needs to be performed on the message transmitted by the PW; and if a value of the control word identifier is 0, it indicates that control word encapsulation does not need to be performed on the message transmitted by the PW. After determining to add the control word in the current message according to a type of the current message, a corresponding control word is added into the current message, for example, when determining that the current message is a data message, a 4-byte control word is added in the data message, and values of the first 4 bits of the control word are 0; and when determining that the current message is a detection message, 4-byte control word is added in the detection message, and values of the first 4 bits of the control word are 1. A specific structure of the control word may refer to FIG. 1, which will not be repeated here.

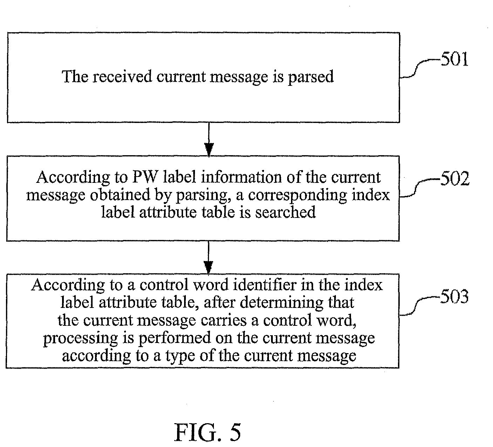

As shown in FIG. 5, it is a flow diagram of a method for receiving messages provided by the example of the present document, and the following steps are included.

In step 501, the received current message is parsed.

In step 502, according to PW label information of the current message obtained by parsing, a corresponding index label attribute table is searched.

In step 503, after determining that the current message carries a control word according to a control word identifier in the index label attribute table, processing is performed on the current message according to a type of the current message.

Specifically, after receiving the current message through a PW, a message receiving end parses the current message, and according to the PW label information obtained by parsing, searches the corresponding index label attribute table; and according to the control word identifier in the index label attribute table, judges whether the current message carries the control word. For example, when a value of the control word identifier is 1, it indicates that the current message carries the control word; and when a value of the control word identifier is 0, it indicates that the current message does not carry the control word. Wherein, the index label attribute table can be obtained from a local storage device, and a corresponding relation between the index label attribute table and the PW label information needs to be established in advance.

When a judgment result is that the current message does not carry the control word, the current message is forwarded directly. When the judgment result is that the current message carries the control word, it is required to process the current message according to the type of the current message. For example, according to a type of the control word carried in the current message, when determining that the current message is a data message, after deleting the control word, the processed data message is forwarded; and according to the type of the control word carried in the current message, when determining that the current message is a detection message, processing is performed on the detection message. A way of forwarding the data message and a way of processing the detection message do not influence the implementation of the technical scheme provided by the example of the present document.

Through the above description, it can be seen that, with the method provided by the example of the present document, it is determined whether to add the control word in the message according to a specific situation through a control word identifier bit corresponding to the PW label at the message sending end; and at the message receiving end, corresponding processing is performed according to whether the message carries the control word, thus, it can select to enable or close the control word according to a specific scenario, which reduces a probability of mistakenly processing the messages.

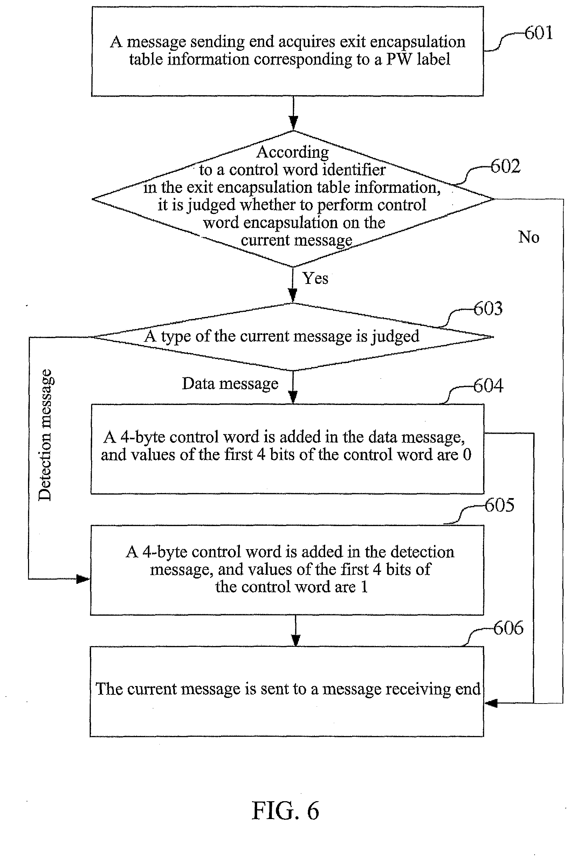

The method provided by the technical scheme of the present document will be described in detail through specific examples below, and as shown in FIG. 6, when a message is sent, the flowing steps are specifically included.

In step 601, a message sending end acquires exit encapsulation table information corresponding to a PW label.

In step 602, according to a control word identifier in the exit encapsulation table information, it is judged whether to perform control word encapsulation on the current message; if yes, step 603 is executed; and if no, step 606 is executed.

In step 603, a type of the current message is judged, if the current message is a data message, step 604 is executed; and if the current message is a detection message, step 605 is executed; specifically, the type of the current message can be judged according to a value of a message type identifier bit, or the type of the current message can be judged according to other identifiers or information.

In step 604, a 4-byte control word is added in the data message, and values of the first 4 bits of the control word are 0, and then step 606 is executed.

In step 605, a 4-byte control word is added in the detection message, and values of the first 4 bits of the control word are 1.

In step 606, the current message is sent to a message receiving end.

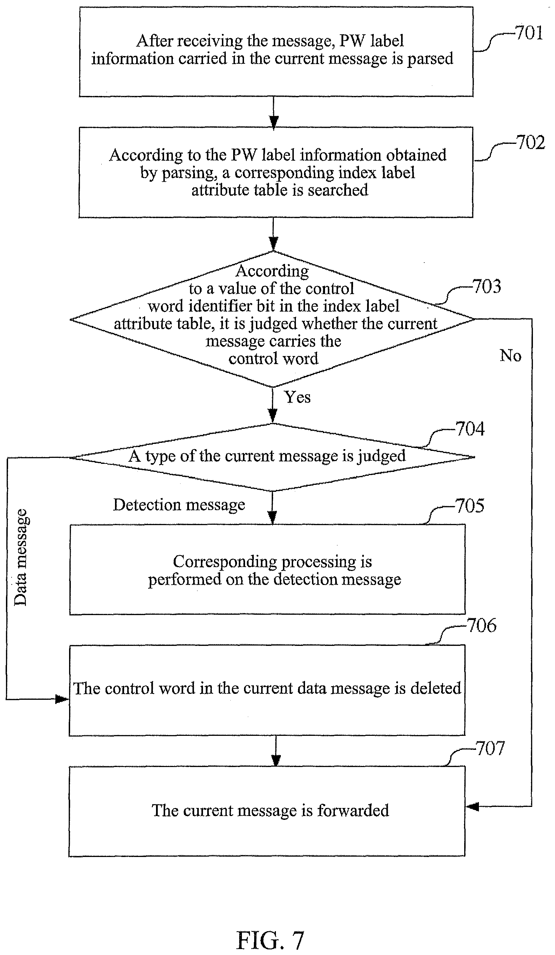

The above steps 601-606 are for a specific process of the message sending end sending the message, and when the message receiving end receives the current message, as shown in FIG. 7, the following steps are specifically executed.

In step 701, after receiving the message, PW label information carried in the current message is parsed.

In step 702, according to the PW label information obtained by parsing, a corresponding index label attribute table is searched; the index label attribute table can be obtained from a local storage device, and a corresponding relation between the index label attribute table and the PW label information needs to be established in advance.

In step 703, according to a value of the control word identifier bit in the index label attribute table, it is judged whether the current message carries the control word; if the control word is carried, step 704 is executed; and if the control word is not carried, step 707 is executed.

In step 704, a type of the current message is judged, if the current message is a detection message, step 705 is executed; and if the current message is a data message, step 706 is executed.

In step 705, corresponding processing is performed on the detection message.

In step 706, the control word in the current data message is deleted.

In step 707, the current message is forwarded.

Through the above description, it can be seen that, with the method provided by the example of the present document, it is determined whether to add the control word in the message according to a specific situation through a control word identifier bit corresponding to the PW label at the message sending end; and at the message receiving end, corresponding processing is performed according to whether the message carries the control word, thus, it can select to enable or close the control word according to a specific scenario, which reduces a probability of mistakenly processing the messages.

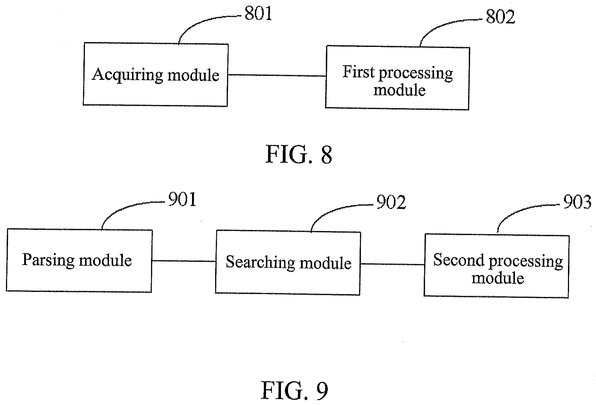

Based on the same inventive concept, the example of the present document also provides a device for sending messages, and as shown in FIG. 8, an acquiring module 801 and a first processing module 802 are included.

The acquiring module 801 is configured to: acquire exit encapsulation table information corresponding to a PW label; and
the first processing module 802 is configured to: after determining to add a control word in the current message according to a control word identifier in the exit encapsulation table information, add the control word in the current message and send the current message.

Preferably, the first processing module 802 is further configured to: when adding the control word in the current message, according to a type of the current message, adding a corresponding control word into the current message.

Based on the same inventive concept, the example of the present document also provides a device for receiving messages, and as shown in FIG. 9, a parsing module 901, a searching module 902 and a second processing module 903 are included.

The parsing module 901 is configured to: parse the received current message;
the searching module 902 is configured to: according to PW label information of the current message obtained by parsing, search a corresponding index label attribute table; and
the second processing module 903 is configured to: after determining that the current message carries a control word according to a control word identifier in the index label attribute table, process the current message according to a type of the current message.

Preferably, the second processing module 903 is further configured to: when determining that the current message is a data message according to a type of the control word carried in the current message, after deleting the control word, forward the processed data message; and when determining that the current message is a detection message according to a type of the control word carried in the current message, process the detection message.

Preferably, the second processing module 903 is further configured to: after determining that the current message does not carry the control word, directly forward the current message.

Through the above description, it can be seen that, with the method, device and system for receiving and sending messages provided by the example of the present document, it is determined whether to add the control word in the message according to a specific situation through a control word identifier bit corresponding to the PW label at the message sending end; and at the message receiving end, corresponding processing is performed according to whether the message carries the control word, thus, it can select to enable or close the control word according to a specific scenario, which reduces a probability of mistakenly processing the messages.

The skilled in the art should understand that the example of the present document can be a method, a system or a computer program product. Therefore, a form of complete hardware example, a form of complete software example or a form of example combining software aspect and hardware aspect can be used in the technical scheme of the present document. Moreover, a form of computer program product executed on one or multiple computer available memory mediums (including but not limited to a disk memory, a Compact Disc Read-Only Memory (CD-ROM)) and an optical memory and so on) which include computer available program codes can be used in the technical scheme of the present document.

The technical scheme of the present document is described according to the flow diagrams and/or block diagrams of the method, device (system) and computer program product of the example of the present document. It should be understood that each flow and/or block in the flow diagrams and/or block diagrams and a combination of flows and/or blocks in the flow diagrams and/or block diagrams can be implemented by computer program instructions. These computer program instructions can be provided for an all-purpose computer, a special-purpose computer, an embedded processor or processors of other programmable data processing devices so as to generate a machine, which makes the instructions executed by the computer or processors of other programmable data processing devices generate a device used for implementing functions specified in one or multiple flows of the flow diagrams and/or in one or multiple blocks of the block diagrams.

These computer program instructions also can be stored in a computer readable memory which can guide the computer or other programmable data processing devices to work in a specific way, which makes the instructions stored in the computer readable memory generate manufactures including an instruction device, and the instruction device implements functions specified in one or multiple flows of the flow diagrams and/or in one or multiple blocks of the block diagrams.

These computer program instructions also can be loaded onto the computer or other programmable data processing devices, which makes a series of operation steps be executed on the computer or other programmable devices so as to generate the processing implemented by the computer, thus, the instructions executed by the computer or other programmable devices provide the steps used for implementing functions specified in one or multiple flows of the flow diagrams and/or in one or multiple blocks of the block diagrams.

Though the preferred examples of the present document have been described, the skilled in the art can make other alterations and modifications for these examples once they learn the basic creative concept. Therefore, it intends to interpret that the appended claims include the preferred examples and all the alterations and modifications fallen into the protection scope of the present document.

### Industrial Applicability

With the method, device and system for receiving and sending the messages provided by the example of the present document, it can select to enable or close a control word according to a specific scenario, which reduces a probability of mistakenly processing the messages.

## Claims

1. A method for sending messages, **characterized by** comprising:
acquiring (401), by a message sending end, exit encapsulation table information corresponding to a Pseudowire, PW, label; and
after determining to add a control word in a current message according to a control word identifier in the exit encapsulation table information, adding (402) the control word in the current message and sending the current message.

2. The method according to claim 1, wherein, the step of adding the control word in the current message comprises: according to a type of the current message, adding a corresponding control word into the current message.

3. A method for receiving messages, **characterized by** comprising:
Parsing (501), by a message receiving end, a received current message;
according to Pseudowire, PW, label information of the current message obtained by parsing, searching (502) a corresponding index label attribute table; and
after determining that the current message carries a control word according to a control word identifier in the index label attribute table, processing (503) the current message according to a type of the current message.

4. The method according to claim 3, wherein, the step of processing the current message according to a type of the current message comprises:
when determining that the current message is a data message according to a type of the control word carried in the current message, deleting the control word, and forwarding the processed data message; and
when determining that the current message is a detection message according to a type of the control word carried in the current message, processing the detection message.

5. The method according to claim 3, further comprising: after determining that the current message does not carry the control word according to the control word identifier in the index label attribute table, directly forwarding the current message.

6. A device for sending messages, **characterized by** comprising: an acquiring module (801) and a first processing module (802), wherein,
the acquiring module (801) is configured to: acquire exit encapsulation table information corresponding to a Pseudowire, PW, label; and
the first processing module (802) is configured to: after determining to add a control word in a current message according to a control word identifier in the exit encapsulation table information, add the control word in the current message and send the current message.

7. The device according to claim 6, wherein, the first processing module (802) is further configured to: when adding the control word in the current message, according to a type of the current message, adding a corresponding control word into the current message.

8. A device for receiving messages, **characterized by** comprising: a parsing module (901), a searching module (902) and a second processing module (903), wherein,
the parsing module (901) is configured to: parse a received current message;
the searching module (902) is configured to: according to Pseudowire, PW, label information of the current message obtained by parsing, search a corresponding index label attribute table; and
the second processing module (903) is configured to: after determining that the current message carries a control word according to a control word identifier in the index label attribute table, process the current message according to a type of the current message.

9. The device according to claim 8, wherein, the second processing module (903) is further configured to: when determining that the current message is a data message according to a type of the control word carried in the current message, delete the control word, and forward the processed data message; and when determining that the current message is a detection message according to a type of the control word carried in the current message, process the detection message.

10. The device according to claim 8, wherein, the second processing module (903) is further configured to: after determining that the current message does not carry the control word, directly forward the current message.

11. A system for receiving and sending messages, comprising: a message sending end (301) and a message receiving end (302); wherein,
the message sending end (301) is configured to: acquire exit encapsulation table information corresponding to a Pseudowire, PW, label; and after determining to add a control word in a current message according to a control word identifier in the exit encapsulation table information, add the control word in the current message and send the current message; and
the message receiving end (302) is configured to: parse the current message received; according to PW label information of the current message obtained by parsing, search a corresponding index label attribute table; and after determining that the current message carries the control word according to the control word identifier in the index label attribute table, process the current message according to a type of the current message.

## Patentansprüche

1. Verfahren zum Senden von Nachrichten, **gekennzeichnet durch**:
Erfassen (401) von Informationen aus einer Ausgangsverkapselungstabelle durch eine Nachrichtensendeseite, die einem Label von Pseudowire, PW, entsprechen; und
nach dem Bestimmen des Einfügens eines Steuerworts in eine aktuelle Nachricht entsprechend einem Steuerwortidentifizierer in den Informationen aus der Ausgangsverkapselungstabelle, Einfügen (402) des Steuerworts in die aktuelle Nachricht und Senden der aktuellen Nachricht.

2. Verfahren nach Anspruch 1, wobei der Schritt des Einfügens des Steuerworts in die aktuelle Nachricht Folgendes umfasst: gemäß einem Typ der aktuellen Nachricht, Einfügen eines entsprechenden Steuerworts in die aktuelle Nachricht.

3. Verfahren zum Empfangen von Nachrichten, **gekennzeichnet durch**:
Parsen (501) einer empfangenen aktuellen Nachricht durch eine Nachrichtenempfangsseite;
entsprechend den Label-Informationen von Pseudowire, PW, der aktuellen Nachricht, die durch Parsing ermittelt wurden, Durchsuchen (502) einer Tabelle mit entsprechenden Index-Label-Attributen; und
nach dem Bestimmen, dass die aktuelle Nachricht ein Steuerwort trägt, das einem Steuerwortidentifizierer in der Tabelle mit Index-Label-Attributen entspricht, Verarbeiten (503) der aktuellen Nachricht entsprechend eines Typs der aktuellen Nachricht.

4. Verfahren nach Anspruch 3, wobei der Schritt der Verarbeitung der aktuellen Nachricht entsprechend eines Typs der aktuellen Nachricht Folgendes umfasst:
bei der Bestimmung, dass die aktuelle Nachricht eine Datennachricht entsprechend eines Typs des Steuerworts ist, das in der aktuellen Nachricht getragen wird, Löschen des Steuerworts und Weiterleiten der verarbeiteten Datennachricht; und
bei der Bestimmung, dass die aktuelle Nachricht eine Erkennungsnachricht entsprechend eines Typs des Steuerworts ist, das in der aktuellen Nachricht getragen wird, Verarbeiten der Erkennungsnachricht.

5. Verfahren nach Anspruch 3, weiter umfassend: nach dem Bestimmen, dass die aktuelle Nachricht das Steuerwort entsprechend dem Steuerwortidentifizierer in der Tabelle mit den Index-Label-Attributen nicht trägt, direkte Weiterleitung der aktuellen Nachricht.

6. Eine Vorrichtung zum Senden von Nachrichten, **gekennzeichnet durch**: ein Erfassungsmodul (801) und ein erstes Verarbeitungsmodul (802), wobei
das Erfassungsmodul (801) für Folgendes konfiguriert ist: Erfassen der Informationen aus der Ausgangsverkapselungstabelle, die einem Label von Pseudowire, PW, entsprechen; und
das erste Verarbeitungsmodul (802) für Folgendes konfiguriert ist: nach dem Bestimmen des Einfügens eines Steuerworts in eine aktuelle Nachricht entsprechend eines Steuerwortidentifizierers in den Informationen aus der Ausgangsverkapselungstabelle, Einfügen des Steuerworts in die aktuelle Nachricht und Senden der aktuellen Nachricht.

7. Die Vorrichtung nach Anspruch 6, wobei das erste Verarbeitungsmodul (802) des Weiteren für Folgendes konfiguriert ist: beim Einfügen des Steuerworts in die aktuelle Nachricht entsprechend eines Typs der aktuellen Nachricht, Einfügen eines entsprechenden Steuerworts in die aktuelle Nachricht.

8. Eine Vorrichtung zum Empfangen von Nachrichten, **gekennzeichnet durch**: ein Parsing-Modul (901), ein Suchmodul (902) und ein zweites Verarbeitungsmodul (903), wobei
das Parsing-Modul (901) für Folgendes konfiguriert ist: Parsen einer empfangenen aktuellen Nachricht;
das Suchmodul (902) für Folgendes konfiguriert ist: entsprechend den Label-Informationen von Pseudowire, PW, der aktuellen Nachricht, die durch Parsen ermittelt wurden, Durchsuchen einer entsprechenden Tabelle mit Index-Label-Attributen; und
das zweite Verarbeitungsmodul (903) für Folgendes konfiguriert ist: nach dem Bestimmen, dass die aktuelle Nachricht ein Steuerwort trägt, das einem Steuerwortidentifizierer in der Tabelle mit Index-Label-Attributen entspricht, Verarbeiten der aktuellen Nachricht entsprechend einem Typ der aktuellen Nachricht.

9. Die Vorrichtung nach Anspruch 8, wobei das zweite Verarbeitungsmodul (903) des Weitere für Folgendes konfiguriert ist: bei der Bestimmung, dass die aktuelle Nachricht eine Datennachricht entsprechend eines Typs des Steuerworts ist, das in der aktuellen Nachricht getragen wird, Löschen des Steuerworts und Weiterleiten der verarbeiteten Datennachricht; und bei der Bestimmung, dass die aktuelle Nachricht eine Erkennungsnachricht entsprechend eines Typs des Steuerworts ist, das in der aktuellen Nachricht getragen wird, Verarbeiten der Erkennungsnachricht.

10. Die Vorrichtung nach Anspruch 8; wobei das zweite Verarbeitungsmodul (903) des Weiteren für Folgendes konfiguriert ist: nach dem Bestimmen, dass die aktuelle Nachricht das Steuerwort nicht trägt, direktes Weiterleiten der aktuellen Nachricht.

11. Ein System zum Empfangen und Senden von Nachrichten, umfassend: eine Nachrichtensendeseite (301) und eine Nachrichtenempfangsseite (302); wobei
die Nachrichtensendeseite (301) für Folgendes konfiguriert ist: Erfassen von Informationen aus der Ausgangsverkapselungstabelle entsprechend einem Label von Pseudowire, PW; und nach dem Bestimmen des Einfügens eines Steuerworts in eine aktuelle Nachricht entsprechend eines Steuerwortidentifizierers in den Informationen aus der Ausgangsverkapselungstabelle Einfügen des Steuerworts in die aktuelle Nachricht und Senden der aktuellen Nachricht; und
die Nachrichtenempfangsseite (302) für Folgendes konfiguriert ist: Parsen der empfangenen aktuellen Nachricht; entsprechend den PW-Label-Informationen der aktuellen Nachricht, die durch Parsing ermittelt wurden, Durchsuchen einer Tabelle mit entsprechenden Index-Label-Attributen; und nach dem Bestimmen, dass die aktuelle Nachricht das Steuerwort trägt, das einem Steuerwortidentifizierer in der Tabelle mit Index-Label-Attributen entspricht, Verarbeiten der aktuellen Nachricht entsprechend eines Typs der aktuellen Nachricht.

## Revendications

1. Procédé de transmission de messages, **caractérisé en ce qu'**il comprend :
l'acquisition (401), par une extrémité de transmission de message, d'informations de table d'encapsulation de sortie correspondante à une étiquette pseudo-filaire, PW ; et
après la détermination du fait d'ajouter un mot de commande dans un message actuel en fonction d'un identificateur de mot de commande dans les informations de table d'encapsulation de sortie, l'ajout (402) du mot de commande dans le message actuel et l'envoi du message actuel.

2. Procédé selon la revendication 1, dans lequel, l'étape d'ajout du mot de commande dans le message actuel comprend : en fonction d'un type du message actuel, l'ajout d'un mot de commande correspondant dans le message actuel.

3. Procédé de réception de messages, **caractérisé en ce qu'**il comprend :
l'analyse syntaxique (501), par une extrémité de réception de message, d'un message actuel reçu ;
en fonction d'informations d'étiquette pseudo-filaire, PW, du message actuel obtenu par l'analyse syntaxique, la recherche (502) d'une table d'attributs d'étiquettes d'indice correspondante ; et
après la détermination que le message actuel transporte un mot de commande en fonction d'un identificateur de mot de commande dans la table d'attributs d'étiquettes d'indice, le traitement (503) du message actuel en fonction d'un type du message actuel.

4. Procédé selon la revendication 3, dans lequel, l'étape de traitement du message actuel en fonction d'un type du message actuel comprend :
lors de la détermination que le message actuel est un message de données en fonction d'un type du mot de commande transporté dans le message actuel, l'effacement du mot de commande, et l'envoi du message de données traité ; et
lors de la détermination que le message actuel est un message de détection en fonction d'un type du mot de commande transporté dans le message actuel, le traitement du message de détection.

5. Procédé selon la revendication 3, comprenant en outre : après la détermination que le message actuel ne transporte pas le mot de commande en fonction de l'identificateur de mot de commande dans la table d'attributs d'étiquettes d'indice, l'envoi directe du message actuel.

6. Dispositif de transmission de messages, **caractérisé en ce qu'**il comprend : un module d'acquisition (801) et un premier module de traitement (802), dans lequel,
le module d'acquisition (801) est configuré pour : acquérir des informations de table d'encapsulation de sortie correspondante à une étiquette pseudo-filaire, PW ; et
le premier module de traitement (802) est configuré pour : après la détermination du fait d'ajouter un mot de commande dans un message actuel en fonction d'un identificateur de mot de commande dans les informations de table d'encapsulation de sortie, ajouter le mot de commande dans le message actuel et envoyer le message actuel.

7. Dispositif selon la revendication 6, dans lequel, le premier module de traitement (802) est configuré en outre pour : lors de l'ajout du mot de commande dans le message actuel, en fonction d'un type du message actuel, l'ajout d'un mot de commande correspondant dans le message actuel.

8. Dispositif de réception de messages, **caractérisé en ce qu'**il comprend : un module d'analyse syntaxique (901), un module de recherche (902) et un deuxième module de traitement (903), dans lequel,
le module d'analyse syntaxique (901) est configuré pour : analyser syntaxiquement un message actuel reçu ;
le module de recherche (902) est configuré pour : en fonction d'informations d'étiquette pseudo-filaire, PW, du message actuel obtenu par l'analyse syntaxique, rechercher une table d'attributs d'étiquettes d'indice correspondante ; et
le deuxième module de traitement (903) est configuré pour : après la détermination que le message actuel transporte un mot de commande en fonction d'un identificateur de mot de commande dans la table d'attributs d'étiquettes d'indice, traiter le message actuel en fonction d'un type du message actuel.

9. Dispositif selon la revendication 8, dans lequel le deuxième module de traitement (903) est configuré en outre pour : lors de la détermination que le message actuel est un message de données en fonction d'un type du mot de commande transporté dans le message actuel, effacer le mot de commande, et envoyer le message de données traité ; et lors de la détermination que le message actuel est un message de détection en fonction d'un type du mot de commande transporté dans le message actuel, traiter le message de détection.

10. Dispositif selon la revendication 8, dans lequel le deuxième module de traitement (903) est configuré en outre pour : après la détermination que le message actuel ne transporte pas le mot de commande, envoyer directement le message actuel.

11. Système de réception et de transmission de messages, comprenant : une extrémité de transmission de message (301) et une extrémité de réception de message (302) ; dans lequel,
l'extrémité de transmission de message (301) est configurée pour : acquérir des informations de table d'encapsulation de sortie correspondante à une étiquette pseudo-filaire, PW ; et après la détermination du fait d'ajouter un mot de commande dans un message actuel en fonction d'un identificateur de mot de commande dans les informations de table d'encapsulation de sortie, ajouter le mot de commande dans le message actuel et envoyer le message actuel ; et
l'extrémité de réception de message (302) est configurée pour : analyser syntaxiquement le message actuel reçu ; en fonction d'informations d'étiquette PW du message actuel obtenu par l'analyse syntaxique, la recherche d'une table d'attributs d'étiquettes d'indice correspondante ; et après la détermination que le message actuel transporte le mot de commande en fonction de l'identificateur de mot de commande dans la table d'attributs d'étiquettes d'indice, traiter le message actuel en fonction d'un type du message actuel.
